# EUROPÄISCHE PATENTSCHRIFT

(11) **EP 3 947 211 B1**
(45) Veröffentlichungstag und Bekanntmachung des Hinweises auf die Patenterteilung: **15.03.2023**
(21) Anmeldenummer: 20712889.3
(22) Anmeldetag: 16.03.2020
(51) Int. Cl.: B65G 15/16, B65G 15/22, B65G 37/00, B65G 47/53, B65G 15/08, B65G 47/44

(54) **VORRICHTUNG ZUM LEITEN EINES VON EINEM ABWURFENDE ODER AUSTRAGSENDE EINER FÖRDEREINRICHTUNG ABFLIESSENDEN MATERIALSTROMS**
DEVICE FOR GUIDING A MATERIAL FLOW FLOWING OUT FROM A DISCHARGE END OR DELIVERY END OF A CONVEYING APPARATUS
ARRANGEMENT POUR GUIDER UN FLUX DE MATIÈRE, QUI S'ÉCOULE D'UNE EXTRÉMITÉ D'ÉJECTION OU D'UNE EXTRÉMITÉ DE DÉCHARGE D'UN DISPOSITIF DE CONVOYAGE

(30) Priorität: 03.04.2019 DE 102019108687
(43) Veröffentlichungstag der Anmeldung: 09.02.2022
(73) Patentinhaber: Scrapetec GmbH, 47475 Kamp-Lintfort (DE); Montanuniversität Leoben, 8700 Leoben (AT)
(72) Erfinder: DÜNNWALD, Wilfried, 47475 Kamp-Lintfort (DE); PRENNER, Michael, 8720 St. Margarethen bei Knittelfeld (AT)
(74) Vertreter: Cohausz & Florack
(86) Internationale Anmeldenummer: PCT/EP2020/057068
(87) Internationale Veröffentlichungsnummer: WO 2020/200724

(56) Entgegenhaltungen:
- CN-A- 104 016 112
- CN-Y- 2 671 999
- DE-A1- 3 919 469
- FR-A1- 2 279 644
- FR-A1- 2 681 132
- JP-A- S61 171 579
- US-A- 3 941 238

## Beschreibung

Die Erfindung betrifft eine Förderanlage zum Transportieren von Schüttgut, mit einer Fördereinrichtung und einer an einem Abwurfende der Fördereinrichtung angeordneten Vorrichtung zum Umlenken eines von dem Abwurfende der Fördereinrichtung abfließenden Materialstroms, und mit einer weiteren Fördereinrichtung, die der Fördereinrichtung in Förderrichtung des Materialstroms nachfolgend angeordnet ist, wobei die Vorrichtung zum Umlenken des Materialstroms zwischen der Fördereinrichtung und der weiteren Fördereinrichtung angeordnet ist, und wobei die Vorrichtung zum Umlenken des Materialstroms mindestens zwei endlose, umlaufend bewegbare Prallbänder aufweist, gemäß dem Oberbegriff des Anspruchs 1.

Fördergut, wie zum Beispiel Gestein, Erz oder Kohle in einem Bergbaubetrieb, wird üblicherweise mittels Fördereinrichtungen, wie zum Beispiel Gurtförderanlagen, transportiert. In vielen Fällen wird das zu fördernde Material von einem abgebenden Tragmittel, zum Beispiel einem Fördergurt abgeworfen und das abgeworfene Material von einem aufnehmenden Tragmittel, beispielsweise einem Fördergurt weiter gefördert. Handelt es sich bei dem Fördergut um feines Schüttgut, wie zum Beispiel Sand, und ist die Fallhöhe niedrig, ist oftmals keinerlei Maßnahme vorgesehen, um den Materialstrom in Richtung des aufnehmenden Tragmittels zu beeinflussen.

Insbesondere bei abrasivem grobstückigem Fördergut sowie bei größerer Fallhöhe wird der abfließende Materialstrom jedoch üblicherweise durch eine Umlenkeinrichtung zumindest teilweise in Förderrichtung umgelenkt, um die Aufprallenergie zu verringern und somit den Verschleiß des aufnehmenden Tragmittels zu minimieren. Solche Umlenkungen erfolgen beispielsweise mittels Prallflächenelementen oder Materialrutschen, die häufig mit verschleißfesten Belägen oder verschleißfesten Auskleidungen versehen sind.

Durch den Sturz und Aufprall eines Fördergutstroms in einer Aufgabe- oder Übergabestation entsteht oft viel Feinstkorn im Fördergut, wobei es häufig auch zu einer erheblichen Staubentwicklung kommt. In vielen Fällen ist das Feinstkorn jedoch nicht erwünscht und erfordert dann einen zusätzlichen Abtrenn- und/oder Aufbereitungsprozess.

Aufgrund der hohen kinetischen Energie, die sich beim Fall des Fördergutes ergibt, kommt es zu hohem Verschleiß an Anlagenteilen der Fördereinrichtung, insbesondere an einem das Fördergut aufnehmenden Fördergurt. Schwere Haufwerksstücke treffen mit hoher kinetischer Energie auf den aufnehmenden Fördergurt und müssen im Aufprallmoment in Förderrichtung beschleunigt werden. Hierbei kommt es zu Oberflächenschäden des Fördergurtes. Hat ein Fördergurt Oberflächenschäden, so kann er mit den meisten herkömmlichen Fördergurtabstreifern nicht mehr effizient gereinigt werden. Die Folge ist dann eine schnelle Verschmutzung der Gurtfördereranlage.

Störende Begleiterscheinungen der stürzenden Aufgabe bzw. Übergabe des Fördergutstroms sind oft Grobschäden, wie Durchschläge im Fördergurt, und Verschüttungen. Verschüttungen können Produktionsverluste ergeben und sind stets mit Reinigungskosten verbunden. Durchschläge im Fördergurt bedürfen einer aufwändigen Reparatur oder haben Fördergurtwechsel zur Folge.

In einer Aufgabe- oder Übergabestation nicht in Förderrichtung gelenkte Materialströme müssen durch motorische Energie auf die Fördergeschwindigkeit des aufnehmenden Fördergurtes beschleunigt werden. Insbesondere bei hohen Volumenströmen bzw. Massenströmen, z. B. bei mehreren hundert Tonnen pro Stunde, ist der zusätzliche Energieverbrauch erheblich.

Aus der JP 60-151828U ist eine Förderanlage zum Transport von Schüttgut bekannt, die in einer Übergabestation zwischen einem abwerfendem Förderband und einem aufnehmenden Förderband ein Prallband aufweist, das über zwei zwischengeordnete Räder durch das abwerfende Förderband angetrieben wird. Die Förderrichtung des Prallbandes entspricht dabei der Förderrichtung des abwerfenden Förderbandes. Die DE 10 2015 215 787 A1 beschreibt eine Einrichtung zum Leiten eines von einem Abwurfende einer Fördereinrichtung abfließenden Materialstroms, insbesondere Schüttgutstroms. Die Einrichtung umfasst ein endloses, umlaufendes Prallband, das derart ausgerichtet ist, dass es von dem Materialstrom beaufschlagbar ist. Das Prallband ist aus einem verschleißfesten Material wie Stahl hergestellt. Ferner weist es eine Mehrzahl von Platten auf, die miteinander zu einem geschlossenen Plattenband verbunden sind. Das Prall- bzw. Plattenband kann insbesondere durch den abfließenden Materialstrom angetrieben werden. Ferner kann mindestens eine der Umlenkrollen des Bandes mit einer Antriebseinheit, z.B. einem Motor versehen sein.

Die bekannten Einrichtungen zum Leiten eines von einem Abwurfende einer Fördereinrichtung abfließenden Schüttgutstroms, die jeweils ein Prallelement bzw. eine umlaufend bewegbare Prallfläche aufweisen, bieten jedoch oftmals keinen zufriedenstellenden Schutz von Fördereinrichtungen, die einen relativ schnell umlaufenden Fördergurt zum Transport eines hohen Materialstroms aufweisen, wenn der aufnehmende Fördergurt aus größerer Fallhöhe mit abrasivem grobstückigen Fördergut beladen wird.

Die DE 39 19 469 A1 offenbart eine Förderanlage nach dem Oberbegriff des Anspruchs 1 und eine Förderbandvorrichtung für den Transport von Schüttgütern, in der drei Förderbänder, und zwar ein mittleres Förderband und zwei seitliche Förderbänder so im Verhältnis zueinander angebracht sind, dass durch ihre Obertrums ein nach oben offener, kastenförmiger Hohlraum gebildet wird. In einer Ausgestaltung sind die seitlichen bzw. senkrechten Förderbänder mit Materialhaltern in Form von Platten ausgerüstet, die bei Steigungen das Herunterfallen des Schüttguts verhindern.

Davon ausgehend liegt der Erfindung die Aufgabe zugrunde, eine Förderanlage der eingangs genannten Art zu schaffen, die einen verbesserten Schutz eines umlaufenden Tragmittels, insbesondere Fördergurtes, einer Fördereinrichtung in einer Aufgabe- oder Übergabestation beim Transport von abrasivem grobstückigen Fördergut bietet und sich vergleichsweise kostengünstig realisieren lässt. Insbesondere soll das Problem einer Verschüttung von Fördergut behoben oder zumindest nennenswert reduziert werden.

Zur Lösung dieser Aufgabe wird eine Förderanlage mit den in Anspruch 1 angegebenen Merkmalen vorgeschlagen. Vorteilhafte Ausgestaltungen der Erfindung sind in den auf Anspruch 1 rückbezogenen Unteransprüchen angegeben.

Die Vorrichtung zum Umlenken des Materialstroms in der erfindungsgemäßen Förderanlage weist ein erstes endloses, umlaufend bewegbares Prallband auf, das derart angeordnet ist, dass es von dem Materialstrom beaufschlagbar ist, wobei das erste Prallband aus mindestens einem mit Gummi oder Elastomer versehenen Zugmittel hergestellt ist, und Umlenkrollen, die das erste Prallband umlenken und um parallel zueinander verlaufende Drehachsen drehbar sind, wobei neben dem ersten Prallband mindestens ein zusätzliches endloses, umlaufend bewegbares Prallband vorgesehen ist, das im Wesentlichen parallel zu dem ersten Prallband und derart angeordnet ist, dass es von dem Materialstrom beaufschlagbar ist, wobei auch das zusätzliche Prallband aus mindestens einem mit Gummi oder Elastomer versehenen Zugmittel hergestellt ist, wobei dem zusätzlichen Prallband eigene Umlenkrollen zugeordnet sind, die das zusätzliche Prallband umlenken und um parallel zueinander verlaufende Drehachsen drehbar sind, und wobei die Drehachsen der Umlenkrollen des zusätzlichen Prallbandes geneigt zu den Drehachsen der Umlenkrollen des ersten Prallbandes ausgerichtet oder ausrichtbar sind, so dass das erste Prallband und das mindestens eine zusätzliche Prallband quer zur Laufrichtung der Prallbänder betrachtet zueinander abgewinkelte Prallflächen definieren, wobei die Prallflächen der unmittelbar zueinander benachbarten Prallbänder einen Muldungswinkel definieren, wobei die Vorrichtung zum Umlenken des Materialstroms mindestens ein Stützrad aufweist, welches einem der Prallbänder zugeordnet ist und eine Umlaufbewegung der diesem Prallband in Förderrichtung nachfolgenden weiteren Fördereinrichtung auf dieses Prallband überträgt, und wobei die weitere Fördereinrichtung als Stetigförderer, vorzugsweise Förderband, ausgeführt ist.

Durch die Anordnung der mindestens zwei Prallbänder lässt sich eine gemuldete Prallbandvorrichtung realisieren, mittels der sich der Fördergutstrom besser in die Mitte des aufnehmenden Stetigförderers, z. B. Gurtförderers leiten lässt, so dass Verschüttungen weitestgehend verhindert werden. Beispielsweise sind die Drehachsen der Umlenkrollen des mindestens einen zusätzlichen Prallbandes derart zu den Drehachsen der Umlenkrollen des ersten Prallbandes ausgerichtet oder ausrichtbar, dass die von den Prallbändern definierten Prallflächen quer zur Laufrichtung der Prallbänder betrachtet um mindestens 10°, vorzugsweise um mindestens 12,5°, besonders bevorzugt um mindestens 15° zueinander abgewinkelt sind. In vorteilhafter Weise definieren die Prallflächen der unmittelbar zueinander benachbarten Prallbänder einen Muldungswinkel, der beispielsweise in einem Winkelbereich von 20° bis 90°, insbesondere in einem Winkelbereich von 25° bis 37,5° liegt. Auch liegt es Rahmen der Erfindung, dass mehrere Prallbänder derart benachbart zueinander angeordnet werden oder sind, dass die Prallbänder eine zusammengesetzte Mulde bilden, die an einem Muldenlängsrand einen Überhang aufweist. Durch die vorzugsweise variabel einstellbare Muldung der Prallbänder lässt sich eine möglichst mittige Beladung des aufnehmenden Fördergurtes sicherstellen und dadurch ein problematischer Schieflauf des aufnehmenden Fördergurtes vermeiden.

Des Weiteren lässt sich die Vorrichtung zum Umlenken des Materialstroms kostengünstig realisieren, da das jeweilige Prallband aus mindestens einem mit Gummi oder Elastomer versehenen Zugmittel hergestellt ist. Derartige Prallbänder lassen sich kostengünstig herstellen bzw. beschaffen. Zudem lässt sich die aus Gummi oder Elastomer hergestellte Deckschicht des Prallbandes derart ausgestalten, insbesondere dimensionieren und/oder oberflächenstrukturieren, dass das Prallband nach Art eines Polsters die Prallenergie von darauf auftreffendem großstückigem Fördergut, insbesondere Schüttgut zumindest teilweise absorbiert. Dadurch können die Entstehung von unerwünschtem Feinstkorn sowie eine Staubentwicklung reduziert werden.

Vorzugsweise ist das mindestens eine zusätzliche Prallband mindestens zweifach vorgesehen, wobei das erste Prallband zwischen den zusätzlichen Prallbändern angeordnet ist. Beispielsweise weist die Vorrichtung zum Umlenken des Materialstroms mindestens drei oder mindestens vier Prallbänder der im Anspruch 1 angegebenen Art auf. Sofern die Vorrichtung drei oder mehr solche Prallbänder aufweist, können die Prallflächen der Prallbänder in vorteilhafter Weise im Wesentlichen gleiche oder alternativ auch unterschiedlich große Muldungswinkel definieren. Vorzugsweise ist die Lage der Drehachsen der Umlenkrollen der Prallbänder variabel einstellbar, so dass unterschiedliche Muldungswinkel eingestellt werden können. Die Vorrichtung lässt sich somit optimal an die jeweiligen Randbedingungen, wie z.B. Fallhöhe und Abwurfbahn des abfließenden Massenstroms, anpassen.

Dementsprechend sieht eine bevorzugte Ausgestaltung der Erfindung vor, dass die Drehachsen der Umlenkrollen der zusätzlichen Prallbänder derart zu den Drehachsen der Umlenkrollen des ersten Prallbandes ausgerichtet sind, dass die von den zusätzlichen Prallbändern definierten Prallflächen quer zur Laufrichtung der Prallbänder betrachtet in unterschiedlichen Winkeln relativ zu der von dem ersten Prallband definierten Prallfläche angeordnet sind.

Das erste Prallband und das mindestens eine zusätzliche Prallband sind vorzugsweise derart angeordnet, dass sich die Längskanten und/oder Längsränder der zueinander abgewinkelten Prallflächen der Prallbänder einander abdichtend berühren.

Eine weitere vorteilhafte Ausgestaltung der Erfindung ist dadurch gekennzeichnet, dass mindestens eines der Prallbänder auf seiner Außenseite eine Vielzahl länglicher, voneinander beabstandeter Vorsprünge aufweist, die sich quer zur Laufrichtung des Prallbandes erstrecken. Die Vorsprünge wirken zum einen wie Polster, welche Prallenergie absorbieren, zum anderen vergrößern die Vorsprünge die Oberfläche des Prallbandes, so dass bei entsprechender räumlicher Ausrichtung des Prallbandes dieses von dem darauf auftreffenden Materialstrom effektiver angetrieben werden kann. Diesbezüglich ist es auch günstig, wenn nach einer weiteren Ausgestaltung der Erfindung der jeweilige längliche Vorsprung in Laufrichtung des Prallbandes betrachtet eine durchschnittliche Breite im Bereich von 6 cm bis 14 cm, vorzugsweise 8 cm bis 12 cm aufweist. Der Abstand zwischen zwei benachbarten länglichen Vorsprüngen der Vorsprünge des Prallbandes in Laufrichtung des Prallbandes betrachtet liegt vorzugsweise in der gleichen Größenordnung wie die oben genannte durchschnittliche Breite des jeweiligen länglichen Vorsprungs; der Abstand liegt somit vorzugsweise in einem Bereich von 6 cm bis 14 cm, er kann insbesondere in einem Bereich von 8 cm bis 12 cm liegen.

Eine weitere Ausgestaltung der Erfindung sieht vor, dass zwei benachbarte längliche Vorsprünge der Vorsprünge des Prallbandes gegenüber einer Grundfläche einer von ihnen begrenzten Nut um mindestens 20 mm, vorzugsweise mindestens 30 mm nach außen vorstehen. Hierdurch definieren die Vorsprünge ein für den Antrieb des Prallbandes infolge des darauf auftreffenden Materialstroms besonders vorteilhaftes Oberflächenprofil. Ferner ist diese Ausgestaltung auch günstig hinsichtlich der Absorption von Aufprallenergie. Die durch zwei benachbarte längliche Vorsprünge des Prallbandes begrenzte Nut kann auch als Profilrille bezeichnet werden.

Die länglichen Vorsprünge des Prallbandes sind vorzugsweise in zwei umlaufenden Reihen gegliedert angeordnet, wobei die Vorsprünge der einen oder ersten Reihe versetzt zu den Vorsprüngen der anderen oder zweiten Reihe angeordnet sind. Hierdurch wird bei guter Polsterwirkung zugleich eine gute Umlenkbarkeit des endlosen Prallbandes erzielt. Nach einer weiteren Ausgestaltung können die in Laufrichtung (Umlaufrichtung) des Prallbandes aufeinander folgenden länglichen Vorsprünge schräg zur Laufrichtung des Prallbandes verlaufen. Der jeweilige längliche Vorsprung bzw. dessen Mittelachse kann dabei relativ zu der Laufrichtung bzw. Längsmittelachse des Prallbandes mit einem Winkel im Bereich von beispielsweise 45° bis 80° verlaufen.

Das Zugmittel des Prallbandes kann auch als Zugelement, Zugschicht oder Zugträger bezeichnet werden. Das Zugmittel kann beispielsweise aus mehreren Gewebelagen, Stahlseilen, einer Stahlkarkasse und/oder einer Stahlgliederkette gebildet sein. Das Prallband weist mindestens ein solches Zugmittel auf. Die Gewebeeinlagen sind beispielsweise aus Baumwolle, Zellwolle und/oder Kunststofffasern hergestellt. Das Gummi oder Elastomer des Prallbandes, welches das Zugmittel des Prallbandes umhüllt oder bedeckt, besitzt vorzugsweise verschleißfeste und weiter optional selbstverlöschende Materialeigenschaften.

Eine weitere Ausgestaltung der Erfindung ist dadurch gekennzeichnet, dass die Umlenkrollen mindestens eines der Prallbänder als Zahnräder ausgeführt sind, wobei das Prallband auf seiner Innenseite eine mit den Zahnrädern in Eingriff stehende Verzahnung aufweist. Über mindestens eines dieser Zahnräder können zum Antrieb des Prallbandes hohe rotatorische Kräfte bzw. Drehmomente auf das Prallband übertragen werden. Alternativ können die Umlenkrollen mindestens eines der Prallbänder als zahnlose, kreisförmige Scheiben ausgeführt sein, wobei das endlose Prallband an seiner Innenseite zwei voneinander beabstandete Reihen radial einwärts vorstehende Vorsprünge aufweist, in welche die Scheiben formschlüssig eingreifen, um das umlaufende Prallband seitlich zu führen.

Eine weitere Ausgestaltung der Erfindung sieht vor, dass mindestens eine der Umlenkrollen des ersten Prallbandes und mindestens eine der Umlenkrollen des zusätzlichen Prallbandes kraftschlüssig, vorzugsweise kardanisch oder mittels einer Gelenkwelle, miteinander gekoppelt sind. Hierdurch kann in zuverlässiger Weise ein Synchronlauf der Prallbänder mit gleicher Umlaufgeschwindigkeit erzielt werden.

Eine weitere vorteilhafte Ausgestaltung der Erfindung besteht darin, dass den Umlenkrollen kein eigener elektrischer, hydraulischer oder pneumatischer Antrieb zugeordnet ist. Somit lässt sich die erfindungsgemäße Vorrichtung mit vergleichsweise geringem konstruktivem Aufwand sowie mit moderaten Investitionskosten verwirklichen. Als Prallbänder können in der erfindungsgemäßen Vorrichtung beispielsweise im Handel erhältliche, sogenannte Gummiketten verwendet werden, die für Bagger oder andere Raupenfahrwerke aufweisende Baumaschinen angeboten werden. Auch im Handel erhältliche Raupenfahrwerke solcher Bagger oder Baumaschinen können zur Verwirklichung der erfindungsgemäßen Vorrichtung verwendet werden, wobei jedoch der Antrieb des jeweiligen Raupenfahrwerkes vorzugsweise weggelassen wird. Hierdurch können Kosten sowie Gewicht gespart werden.

Eine weitere Ausgestaltung der erfindungsgemäßen Förderanlage sieht vor, dass das erste Prallband und das mindestens eine zusätzliche Prallband an ihren einander zugewandten Längskanten oder Längsränder zahnförmige Formschlusselemente aufweisen, wobei die Längskanten oder Längsränder nach Art einer Verzahnung ineinander greifen. Bei dieser Ausgestaltung kann gegebenenfalls eine kardanische Verbindung der Prallbänder entfallen.

Erfindungsgemäß weist die Vorrichtung zum Umlenken des Materialstroms mindestens ein Stützrad auf, welches einem der Prallbänder zugeordnet ist und eine Umlaufbewegung der diesem Prallband in Förderrichtung nachfolgenden weiteren Fördereinrichtung auf dieses Prallband überträgt, wobei die weitere Fördereinrichtung als Stetigförderer, vorzugsweise Förderband ausgeführt ist. Hierdurch lässt sich in energetisch vorteilhafter Weise erreichen, dass das Prallband durch den nachfolgenden Stetigförderer angetrieben wird, so dass die Umlaufgeschwindigkeit des Prallbandes und die Umlaufgeschwindigkeit des Stetigförderers, vorzugsweise Förderbandes, gleich sind. Somit erfährt das vom Prallband auf den aufnehmenden Stetigförderer geleitete Fördergut keine oder weniger Beschleunigung als bei herkömmlichen Übergabesystemen. Das Fördergut wird somit schonender übergeben, wodurch die Entstehung von Feinstkorn sowie eine Staubentwicklung in besonderem Maße verringert werden können. Insbesondere wird durch diese Ausgestaltung der Verschleiß des aufnehmenden Stetigförderers deutlich reduziert.

Das Stützrad ist vorzugsweise mit einem aus Gummi oder Elastomer hergestellten Reifen versehen. Hierdurch kann ein ausreichend hoher Reibschluss zwischen dem Prallband und dem nachgeordneten, aufnehmenden Stetigförderer, vorzugsweise Förderband sichergestellt werden. Zudem kann der Reifen ein Laufprofil aufweisen, welches den Reibschluss zwischen Prallband und nachgeordnetem Stetigförderer weiter verbessert. Das Stützrad kann auch als Reibrad bezeichnet werden. Bei dem Stützrad kann es sich um ein handelsübliches Rad, beispielsweise ein kleinbauendes, hochbelastbares Anhängerrad mit verschleißfestem Reifen handeln. Das optionale Stützrad ist mit der die Prallbänder tragenden Vorrichtung fest verbindbar bzw. verbunden.

Wird der aufnehmende Stetigförderer, zum Beispiel ein aufnehmender Gurtförderer, für den Förderprozess in Lauf gesetzt, was üblicherweise zeitlich vor dem in Lauf setzen der vorgeordneten, abgebenden Fördereinrichtung, zum Beispiel einer abgebenden Gurtförderanlage erfolgt, so dreht sich das Stützrad und treibt zumindest das ihm zugeordnete Prallband mit an. In dieser Situation muss der Antrieb des aufnehmenden Stetigförderes zunächst etwas mehr Leistung aufbringen, da das Stützrad und das Prallband mit angetrieben werden müssen.

Wird nun die abgebende Fördereinrichtung in Lauf gesetzt und fördert sie Schüttgut oder ähnliches Material, welches auf das Prallband fällt, so ändert sich die Energiebilanz. Denn ein Teil der kinetischen Energie des von der Fördereinrichtung auf das Prallband abfließenden Materialstroms und die gesamte dabei sich auf dem Prallband durch den Materialstrom ergebende potenzielle Energie treiben nun das Prallband eigenständig an. Ist die dabei eingetragene Energie hoch, würde die Umlaufgeschwindigkeit des Prallbandes zunehmen. Da das Prallband jedoch über das Stützrad reibschlüssig mit dem aufnehmenden Stetigförderer gekoppelt ist, ist die Umlaufgeschwindigkeit des Prallbandes auf die Umlaufgeschwindigkeit des aufnehmenden Stetigförderers begrenzt und ein Teil der eingetragenen Energie wird vom Prallband auf den aufnehmenden Stetigförderer übertragen. Somit ergibt sich ein reduzierter Gesamtenergiebedarf.

Die erfindungsgemäße Förderanlage umfasst eine weitere Fördereinrichtung, die der Fördereinrichtung in Förderrichtung des Materialstroms nachfolgend angeordnet ist, wobei die Vorrichtung zum Umlenken des Materialstroms zwischen der Fördereinrichtung und der weiteren Fördereinrichtung angeordnet ist. Bei der weiteren Fördereinrichtung handelt es sich beispielsweise um eine Gurtförderanlage oder eine andere Stetigförderanlage mit einem umlaufenden Trag- und/oder Zugmittel. Wie oben bereits erwähnt, ist die Förderanlage vorzugsweise derart ausgeführt, dass zumindest das erste Prallband der Vorrichtung zum Umlenken des Materialstroms durch ein endloses, umlaufendes Zug- und/oder Tragmittel der weiteren Fördereinrichtung angetrieben wird.

Eine weitere vorteilhafte Ausgestaltung der Förderanlage ist dadurch gekennzeichnet, dass das erste Prallband der Vorrichtung zum Umlenken des Materialstroms mit einem endlosen, umlaufenden Zug- und/oder Tragmittel der weiteren Fördereinrichtung derart gekoppelt ist, dass das erste Prallband eigene Bewegungsenergie auf das Zug- und/oder Tragmittel der weiteren Fördereinrichtung übertragen kann. Die eigene Bewegungsenergie des ersten Prallbandes kann sich dabei aus der kinetischen Energie des auf das Prallband treffenden Materialstroms und aus der potenziellen Energie (Lageenergie) des auf dem Prallband aufliegenden Materialstroms ergeben.

Nachfolgend wird die Erfindung anhand einer Ausführungsbeispiele darstellenden Zeichnung näher erläutert. Es zeigen schematisch:
- Fig. 1: eine Förderanlage zum Transportieren von Schüttgut, welche nicht Teil der Erfindung ist, mit einem Gurtförderer, einer am Abwurfende des Gurtförderers angeordneten Vorrichtung zum Umlenken des Materialstroms und einem den Materialstrom aufnehmenden Gurtförderer, wobei die Vorrichtung zum Umlenken des Materialstroms und ein Abschnitt des aufnehmenden Gurtförderers in einer Längsschnittansicht dargestellt sind;
- Fig. 2: die unteren Umlenkrollen der Vorrichtung zum Umlenken des Materialstroms aus Fig. 1 in einer Axialschnittansicht;
- Fig. 3: ein Ausführungsbeispiel einer erfindungsgemäßen Förderanlage zum Transportieren von Schüttgut, mit einem Gurtförderer, einer am Abwurfende des Gurtförderers angeordneten Vorrichtung zum Umlenken des Materialstroms, einem oder mehreren Stützrädern und einem den Materialstrom aufnehmenden Gurtförderer, wobei die Vorrichtung zum Umlenken des Materialstroms und ein Abschnitt des aufnehmenden Gurtförderers in einer Längsschnittansicht dargestellt sind; und
- Fig. 4: die unteren Umlenkrollen der Vorrichtung zum Umlenken des Materialstroms aus Fig. 3 in einer Axialschnittansicht mit den zugeordneten Stützrädern.

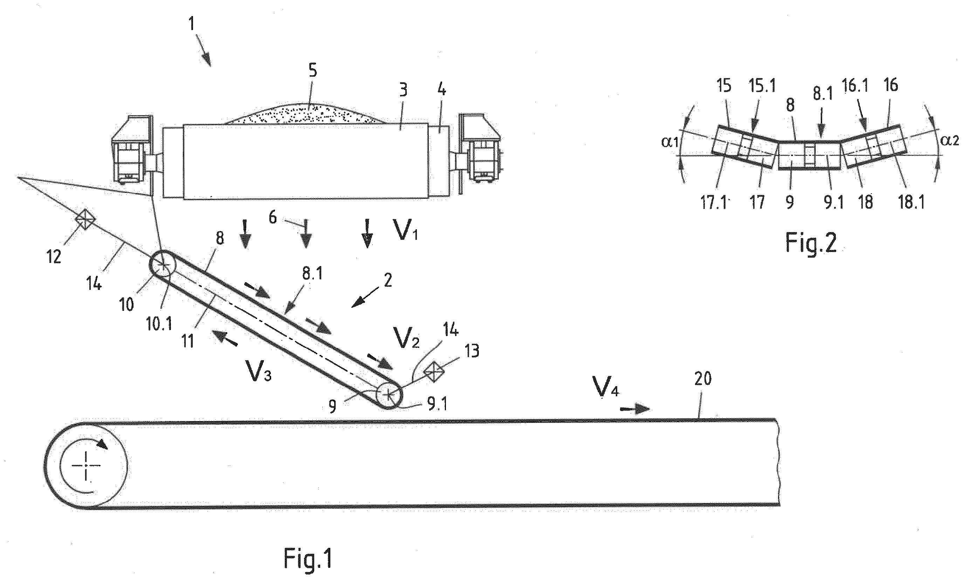

Die Fig. 1 zeigt einen Ausschnitt einer Förderanlage, welche nicht Teil der Erfindung ist, mit einer Fördereinrichtung 1 zum Fördern eines Materialstroms, insbesondere von Schüttgut. Insbesondere zeigt Fig. 1 eine Vorrichtung 2 zum Leiten eines Materialstroms, der von einem Endbereich einer Fördereinrichtung 1 abgeworfen wird. Die Fördereinrichtung 1 ist beispielsweise eine Bandförderanlage (Gurt- oder Stahlbandförderer) oder eine Plattenförderanlage. In Fig. 1 ist das Abwurfende der Fördereinrichtung 1 dargestellt, wobei ein endloser Fördergurt 3 um die Umlenkrolle 4 geführt ist. Auf dem Fördergurt 3 liegendes Material (Schüttgut) 5 wird in die mit den drei zueinander parallelen Pfeilen 6 markierte Förderrichtung abgeworfen, so dass es vom Abwurfende der Fördereinrichtung 1 auf die Vorrichtung 2 zum Leiten des Materialstroms fällt.

Die Vorrichtung 2 zum Leiten eines Materialstroms weist ein erstes endloses, umlaufend bewegbares Prallband 8 auf, das derart angeordnet ist bzw. angeordnet werden kann, dass es von dem Materialstrom beaufschlagt wird. Das Prallband 8 ist aus mindestens einem mit Gummi oder Elastomer versehenen Zugmittel hergestellt. Das Zugmittel ist beispielsweise aus mehreren Gewebelagen, Stahlseilen, einer Stahlkarkasse oder einer Stahlgliederkette gebildet. Das jeweilige Zugmittel (nicht gezeigt) ist in dem Gummi oder Elastomer eingebettet, und/oder Decklagen aus Gummi oder Elastomer sind stoffschlüssig mit dem Zugmittel verbunden.

Des Weiteren umfasst die Vorrichtung 2 Umlenkrollen 9,10, die das Prallband 8 umlenken und um parallel zueinander verlaufende Drehachsen 9.1,10.1 drehbar sind. Zwischen den Umlenkrollen 9,10 können eine oder mehrere Tragrollen (nicht gezeigt) angeordnet sein, die das Obertrum des umlaufenden Prallbandes 8 abstützen und führen.

Die Umlenkrollen 9,10 sowie die Tragrollen sind an einem Längsträger 11 drehbar gelagert. Der Längsträger 11 ist an Festpunkten 12, 13 befestigt. Die Neigung des Längsträgers 11 und damit die Neigung des Prallbandes 8 sind vorzugsweise variabel einstellbar. Hierzu ist der Längsträger 11 beispielsweise über Gelenkverbinder und variable Abspannmittel 14 mit den Festpunkten 12, 13 verbunden.

Die Vorrichtung 2 zum Leiten eines Materialstroms weist neben dem Prallband 8 mindestens ein zusätzliches endloses, umlaufend bewegbares Prallband 15, 16 auf, das im Wesentlichen parallel zu dem Prallband 8 und derart angeordnet ist, dass es ebenfalls von dem Materialstrom beaufschlagt werden kann bzw. wird.

In dem in den Figuren 1 und 2 gezeigten Ausführungsbeispiel weist die Vorrichtung 2 zum Leiten eines Materialstroms neben dem ersten Prallband 8 zwei zusätzliche endlose, umlaufend bewegbare Prallbänder 15, 16 auf, zwischen den das erste Prallband 8 als mittleres Prallband angeordnet ist.

Jedes der beiden zusätzlichen Prallbänder 15, 16 ist ebenfalls aus mindestens einem mit Gummi oder Elastomer versehenen Zugmittel hergestellt. Dem jeweiligen zusätzlichen Prallband 15, 16 sind eigene Umlenkrollen 17, 18 zugeordnet, die das Prallband 15, 16 umlenken und um parallel zueinander verlaufende Drehachsen drehbar sind. Das erste oder mittlere Prallband 8 und die zusätzlichen Prallbänder 15, 16 sind vorzugsweise baugleich ausgeführt. Den Prallbändern 8, 15, 16 und deren Umlenkrollen sowie den gegebenenfalls zwischen den Umlenkrollen angeordneten Tragrollen ist vorzugsweise kein eigener elektrischer, hydraulischer oder pneumatischer Antrieb zugeordnet. Die schräg angeordneten Prallbänder 8, 15, 16 werden durch die kinetische Energie des auf sie fallenden Materialstroms und die potentielle Energie, sich aus dem auf den Prallbändern 8, 15, 16 aufliegenden Material (Schüttgut) ergibt, angetrieben.

Wie in Fig. 2 zu erkennen ist, sind die Drehachsen 17.1, 18.1 der Umlenkrollen 17, 18 der zusätzlichen Prallbänder 15, 16 geneigt zu den Drehachsen 9.1,10.1 der Umlenkrollen 9, 10 des ersten Prallbandes 8 ausgerichtet oder ausrichtbar, so dass das erste oder mittlere Prallband 8 und die zusätzlichen Prallbänder 15, 16 quer zur Laufrichtung der Prallbänder betrachtet zueinander abgewinkelte Prallflächen 8.1, 15.1, 16.1 definieren.

In dem in den Figuren 1 und 2 schematisch dargestellten Ausführungsbeispiel, welches nicht Teil der Erfindung ist, sind die Drehachsen 17.1,18.1 der Umlenkrollen 17, 18 der zusätzlichen Prallbänder 15, 16 derart zu den Drehachsen 9.1,10.1 der Umlenkrollen 9, 10 des mittleren Prallbandes 8 ausgerichtet, dass die von den zusätzlichen Prallbändern 15, 16 definierten Prallflächen 15.1, 16.1 quer zur Laufrichtung der Prallbänder betrachtet in im Wesentlichen gleichen Winkeln α1, α2 relativ zu der von dem mittleren Prallband 8 definierten Prallfläche 8.1 angeordnet sind. Die Winkel α1, α2 ergeben eine Muldung der aus den Prallfächen 15.1, 8.1,16.1 zusammengesetzten Gesamtprallfläche. Der Winkel α1, α2 bzw. der Muldüngswinkel beträgt beispielsweise jeweils ca. 15°. Die Winkel α1, α2 können jedoch auch größer oder kleiner sowie unterschiedlich groß sein.

Des Weiteren ist in Fig. 2 gezeigt, dass das erste Prallband 8 und die zusätzlichen Prallbänder 15,16 derart angeordnet sind, dass sich die Längskanten der zueinander abgewinkelten Prallflächen 8.1,15.1,16.1 der Prallbänder 8, 15, 16 einander abdichtend berühren.

Die Prallbänder 8, 15, 16 werden durch den auf sie fallenden Materialstrom in Lauf gesetzt, wobei die Förderrichtung des Obertrums schräg nach unten in Richtung eines aufnehmenden Gurtförderers 20 oder für Schüttgut geeigneten Stetigförderers gerichtet ist. Damit die Prallbänder 8, 15, 16 synchron und mit gleicher Geschwindigkeit laufen, sind mindestens eine der Umlenkrollen 9,10 des ersten oder mittleren Prallbandes 8 und mindestens eine der Umlenkrollen 17,18 des jeweiligen zusätzlichen Prallbandes 15, 16 kraftschlüssig, beispielsweise kardanisch oder mittels einer Gelenkwelle, miteinander gekoppelt.

Die Fördergeschwindigkeit V4 des aufnehmenden Gurtförderers 20 oder Stetigförderers wird vorzugsweise so eingestellt, dass sie in etwa oder näherungsweise der Fördergeschwindigkeit V1 der abwerfenden Fördereinrichtung 1 entspricht. Die durch den fallenden Materialstrom in Lauf gesetzten Prallbänder 8,15, 16 laufen mit einer Geschwindigkeit, die ebenfalls in etwa oder näherungsweise der Fördergeschwindigkeit V1 oder V4 entspricht. Die Geschwindigkeit V2 des Obertrums des jeweiligen Prallbandes 8, 15, 16 entspricht dabei der Geschwindigkeit V3 des Untertrums des besagten Prallbandes 8, 15, 16.

Die Außenseite des Prallbandes 8 und vorzugsweise auch die Außenseite jedes der Prallbänder 15, 16, die durch den von der Fördereinrichtung 1 abfließenden Materialstrom beaufschlagbar sind, weisen vorzugsweise ein Oberflächenprofil auf. Durch das Oberflächenprofil wird die Übertragung von kinetischer Energie des von der Fördereinrichtung 1 abfließenden Materialstroms auf das jeweilige Prallband 8, 15, 16, um das Prallband in Umlauf zu setzen und weiter anzutreiben, verbessert. Das Oberflächenprofil des Prallbandes weist beispielsweise eine Vielzahl länglicher, voneinander beabstandeter Vorsprünge auf, die sich quer zur Laufrichtung des Prallbandes 8, 15, 16 erstrecken. Der jeweilige Vorsprung des Oberflächenprofils kann beispielsweise eine im Wesentlichen rechteckige, parallelogrammförmige, trapezförmige oder viereckige Form aufweisen, wobei sich der trapezförmige oder viereckige Vorsprung vorzugsweise zur Längsseitenkante des betreffenden Prallbandes 8, 15 oder 16 hin verjüngt. Die durchschnittliche Breite des jeweiligen Vorsprungs beträgt dabei in Laufrichtung des Prallbandes betrachtet beispielsweise zwischen ca. 6 cm bis 14 cm, vorzugsweise zwischen ca. 8 cm bis 12 cm. Der Abstand der aufeinander folgenden Vorsprünge des Oberflächenprofils, wiederum in Laufrichtung des Prallbandes 8, 15, 16 betrachtet, liegt beispielsweise in der Größenordnung der vorgenannten Breite des jeweiligen Vorsprungs. Die Profiltiefe des Oberflächenprofils beträgt beispielsweise mindestens 20 mm, vorzugsweise mindestens 30 mm. Die Vorsprünge des Prallbandes 8, 15, 16 wirken wie stoßabsorbierende Polster. Sie minimieren die Entstehung von Feinstkorn im Fördergut.

Die Umlenkrollen 9,10,17,18 der Prallbänder 8,15,16 können beispielsweise jeweils als Zahnräder ausgeführt sein, wobei das jeweilige Prallband 8, 15, 16 dann auf seiner Innenseite eine mit den Zahnrädern in Eingriff stehende Verzahnung aufweist.

Zur Verwirklichung der Prallbänder 8, 15, 16 und der zugeordneten Führungen (Längsträger) mit Umlenkrollen 9, 10, 17, 18 und Drehlagern können handelsübliche Gummiketten bzw. Raupenfahrwerke aus dem Baumaschinenbereich Verwendung finden. Die Antriebe solcher Raupenfahrwerke (Gummikettenfahrwerke) können bei der erfindungsgemäßen Vorrichtung 2 entfallen. Die Umlenkrollen bzw. Umlenckettenräder der Gummikettenfahrwerke sind vorzugsweise kraftschlüssig, z. B. mittels Gelenkwellen, miteinander gekoppelt.

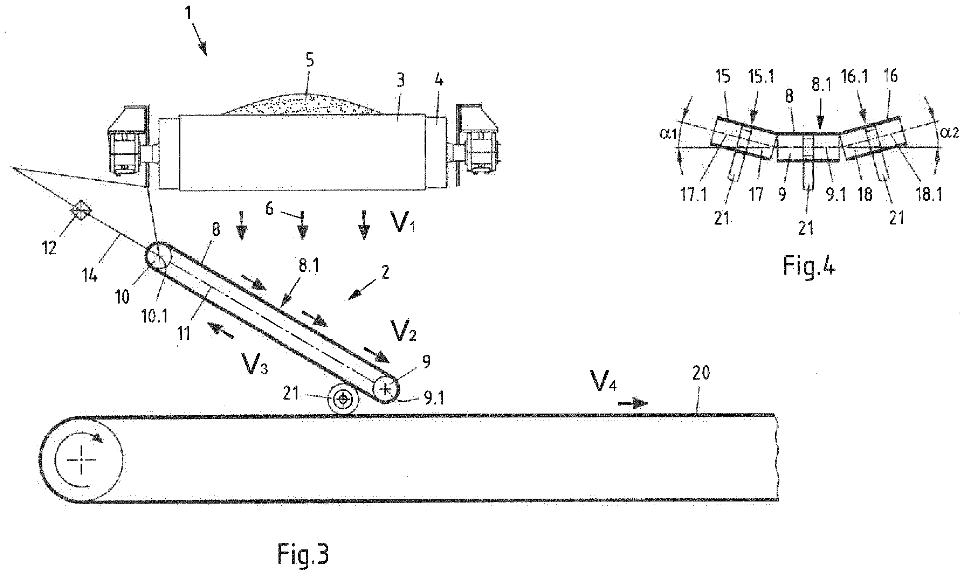

Das in den Figuren 3 und 4 dargestellte erfindungsgemäße Ausführungsbeispiel unterscheidet sich von dem in den Figuren 1 und 2 dargestellte Ausführungsbeispiel welches nicht Teil der Erfindung ist, dadurch, dass erfindungsgemäß mindestens einem der Prallbänder 8,15,16 ein Stützrad 21 zugeordnet ist, das eine Umlaufbewegung des in Förderrichtung nachfolgenden Stetigförderers, vorzugsweise Gurtförderers 20, auf das zugeordnete Prallband 8, 15 oder 16 überträgt. Das Stützrad 21, das auch als Reibrad bezeichnet werden kann, ist mit einem aus Gummi oder Elastomer hergestellten Reifen versehen.

In dem in Fig. 4 gezeigten Beispiel ist jedem der Prallbänder ein Stützrad 21 zugeordnet. Hiervon abweichend kann jedoch vorzugsweise ausschließlich dem ersten oder mittleren Prallband 8 ein Stützrad 21 zugeordnet sein. Dieses einzelne Stützrad 21 kann auch als zentrales Stützrad oder Zentralstützrad bezeichnet werden.

Die aus den Prallbändern 8,15,16 bzw. Gummikettenfahrwerken zusammengesetzte Vorrichtung 2 zum Leiten eines vom Abwurfende einer Fördereinrichtung 1 abfließenden Materialstroms wird in den Materialstrom zwischen abgebender Fördereinrichtung 1 und aufnehmendem Stetigförderer 20 angeordnet, und zwar derart, dass sich die Vorrichtung 2 mit den Prallbändern 8, 15, 16 in Förderrichtung über das einzelne oder mehrere Stützräder (Reibräder) 21 auf dem Obertrum des Stetigförderers 20 abstützt und an ihrem anderen Ende beispielsweise mit Ketten erhöht abgehängt ist. Bei dem mindestens einen Stützrad 21 kann es sich um ein handelsübliches Rad, z. B. ein kleinbauendes hochbelastbares Anhängerrad handeln. Der Radträger des mindestens einen Stützrades 21 ist fest mit der Vorrichtung 2 verbunden.

Beginnt nun der aufnehmende Stetigförderer 20 für die Förderung eines Materialstroms, z. B. Schüttgutstroms, zu laufen, wobei sein Umlauf üblicherweise früher gestartet wird als der Umlauf eines abgebenden Fördergurts 3, so dreht sich das mindestens eine Stützrad 21 und treibt das zugeordnete Prallband 8, 15 und/oder 16 mit an. Die Geschwindigkeit V2 des Prallbandes 8, 15 bzw. 16 entspricht dabei der Geschwindigkeit V4 des Fördergurts bzw. umlaufenden Tragmittels des aufnehmenden Stetigförderers 20. In dieser Situation wird zunächst etwas mehr Antriebsenergie zum Antrieb des Stetigförderers 20 benötigt, da die Prallbänder 8, 15 und 16 mit angetrieben werden müssen.

Beginnt dann der abgebende Fördergurt 3 zu laufen, so fördert er Material (Schüttgut), welches auf die Prallbänder 8, 15, 16 fällt. Ein Teil der kinetischen Energie des vom Fördergurt 3 der Fördereinrichtung 1 abfließenden Materialstroms und die gesamte potentielle Energie (Lageenergie), die von der Masse des auf den Prallbändern 8, 15, 16 aufliegenden Materials abhängt, treiben dabei zusammen die Prallbänder eigenständig an. Dabei gilt, dass die potentielle Energie im Wesentlichen dem Produkt aus Masse des Fördergutes (Schüttgutes), Erdbeschleunigung und Höhe über den Boden entspricht. Ist die so in die Prallbänder 8, 15, 16 eingetragene Energie groß, würde die Umlaufgeschwindigkeit V2 (= V3) der Prallbänder steigen wollen. Da sich die Prallbänder 8,15,16 jedoch über das mindestens eine Stützrad (Reibrad) 21 auf dem umlaufenden Tragelement des Stetigförderers 20 abstützen, bleibt die Umlaufgeschwindigkeit V2 (= V3) der Prallbänder 8, 15, 16 weitgehend konstant, wobei Energie auf das aufnehmende, umlaufende Tragelement des Stetigförderers 20 übertragen wird. Hierdurch ergibt sich eine günstige Energiebilanz für eine erfindungsgemäße Förderanlage.

Die Ausführung der Erfindung ist nicht auf die in der Zeichnung dargestellten Ausführungsbeispiele beschränkt. Vielmehr wird der Schutzbereich der Erfindung durch die Ansprüche bestimmt.

Die vorliegende Erfindung bzw. die optionalen, voranstehend beschriebenen Ausgestaltungen der Erfindung bieten zusammengefasst folgende Vorteile:
- Geringerer Gesamtenergiebedarf als herkömmliche Übergabesysteme
- Fördergutschonung
- Fördergurtschonung mit besserem Reinigungserfolg durch Abstreifer, dadurch geringere Verschmutzung der Gesamtanlage mit geringem Reinigungsbedarf und geringeren Reinigungskosten
- Verschleiß des aufnehmenden Stetigförderers bzw. Fördergurts wird verlagert auf preiswerte, verschleißresistente Bauteile, vorzugsweise handelsübliche Gummiketten für Baumaschinen
- Selbstzentrierende Arbeitsweise durch ein zentrales Stützrad
- Mittige Beladung durch einstellbare Muldung des Gesamtsystems, dadurch weniger Schieflauf eines aufnehmenden Fördergurts
- Einfacher Einbau und Austausch einer Gesamteinheit eines aus einer Gummikette gebildeten Prallbandes
- Schonung und damit deutliche Verbesserung der Oberflächenbeschaffenheit des aufnehmenden Fördergurts
- Vermeidung komplexer und kostenintensiver Materialübergabeeinheiten
- Vermeidung von Wartung, Stillständen und Kosten für den Austausch verschlissener Materialübergabeeinheiten und darin vorgesehener Einbauten
- Weniger Staub
- Weniger Verschüttung
- Materialbrückenbildung weitestgehend verhindert
- Durchschläge im aufnehmenden Fördergurt weitestgehend verhindert
- Prallelement nicht starr angeordnet sondern in Umlaufbewegung, so dass auch längliche Materialien gut umgelenkt werden
- Besonders gute Eignung bei hohen Fallhöhen
- Weniger, Lärm.

## Patentansprüche

1. Förderanlage zum Transportieren von Schüttgut, mit einer Fördereinrichtung (1) und einer an einem Abwurfende der Fördereinrichtung (1) angeordneten Vorrichtung (2) zum Umlenken eines von dem Abwurfende der Fördereinrichtung (1) abfließenden Materialstroms, und mit einer weiteren Fördereinrichtung (20), die der Fördereinrichtung (1) in Förderrichtung des Materialstroms nachfolgend angeordnet ist, wobei die Vorrichtung (2) zum Umlenken des Materialstroms zwischen der Fördereinrichtung (1) und der weiteren Fördereinrichtung (20) angeordnet ist, wobei die Vorrichtung (2) zum Umlenken des Materialstroms ein erstes endloses, umlaufend bewegbares Prallband (8) aufweist, das derart angeordnet ist, dass es von dem Materialstrom beaufschlagbar ist, wobei das erste Prallband (8) aus mindestens einem mit Gummi oder Elastomer versehenen Zugmittel hergestellt ist, und Umlenkrollen (9,10) aufweist, die das erste Prallband (8) umlenken und um parallel zueinander verlaufende Drehachsen (9.1, 10.1) drehbar sind, wobei neben dem ersten Prallband (8) mindestens ein zusätzliches endloses, umlaufend bewegbares Prallband (15,16) vorgesehen ist, das im Wesentlichen parallel zu dem ersten Prallband (8) und derart angeordnet ist, dass es von dem Materialstrom beaufschlagbar ist, wobei auch das zusätzliche Prallband (15,16) aus mindestens einem mit Gummi oder Elastomer versehenen Zugmittel hergestellt ist, wobei dem zusätzlichen Prallband (15, 16) eigene Umlenkrollen (17, 18) zugeordnet sind, die das zusätzliche Prallband (15,16) umlenken und um parallel zueinander verlaufende Drehachsen (17.1, 18.1) drehbar sind, wobei die Drehachsen (17.1, 18.1) der Umlenkrollen (17, 18) des zusätzlichen Prallbandes (15, 16) geneigt zu den Drehachsen (9.1, 10.1) der Umlenkrollen (9, 10) des ersten Prallbandes (8) ausgerichtet oder ausrichtbar sind, so dass das erste Prallband (8) und das mindestens eine zusätzliche Prallband (15,16) quer zur Laufrichtung der Prallbänder betrachtet zueinander abgewinkelte Prallflächen (8.1, 15.1, 16.1) definieren, wobei die Prallflächen (8.1, 15.1, 16.1) der unmittelbar zueinander benachbarten Prallbänder (8,15; 8,16) einen Muldungswinkel (α1, α2) definieren, **dadurch gekennzeichnet, dass** die Vorrichtung (2) zum Umlenken des Materialstroms mindestens ein Stützrad (21) aufweist, welches einem der Prallbänder (8,15,16) zugeordnet ist und eine Umlaufbewegung der diesem Prallband (8,15,16) in Förderrichtung nachfolgenden weiteren Fördereinrichtung (20) auf dieses Prallband (8, 15, 16) überträgt, wobei die weitere Fördereinrichtung (20) als Stetigförderer (20), vorzugsweise Förderband, ausgeführt ist.

2. Förderanlage nach Anspruch 1, **dadurch gekennzeichnet, dass** mindestens eines der Prallbänder (8,15,16) auf seiner Außenseite eine Vielzahl länglicher, voneinander beabstandeter Vorsprünge aufweist, die sich quer zur Laufrichtung des Prallbandes (8,15,16) erstrecken.

3. Förderanlage nach Anspruch 2, **dadurch gekennzeichnet, dass** der jeweilige längliche Vorsprung in Laufrichtung des Prallbandes (8, 15, 16) betrachtet eine durchschnittliche Breite im Bereich von 6 cm bis 14 cm, vorzugsweise 8 cm bis 12 cm aufweist.

4. Förderanlage nach Anspruch 2 oder 3, **dadurch gekennzeichnet, dass** zwei benachbarte längliche Vorsprünge der Vorsprünge gegenüber einer Grundfläche einer von ihnen begrenzten Nut um mindestens 20 mm, vorzugsweise mindestens 30 mm nach außen vorstehen.

5. Förderanlage nach einem der Ansprüche 1 bis 4, **dadurch gekennzeichnet, dass** die Umlenkrollen (9, 10, 17, 18) mindestens eines der Prallbänder (8, 15, 16) als Zahnräder ausgeführt sind, wobei das Prallband (8, 15, 16) auf seiner Innenseite eine mit den Zahnrädern in Eingriff stehende Verzahnung aufweist.

6. Förderanlage nach einem der Ansprüche 1 bis 5, **dadurch gekennzeichnet, dass** mindestens eine der Umlenkrollen (9, 10) des ersten Prallbandes (8) und mindestens eine der Umlenkrollen (17,18) des zusätzlichen Prallbandes (15, 16) kraftschlüssig, vorzugsweise kardanisch oder mittels einer Gelenkwelle, miteinander gekoppelt sind.

7. Förderanlage nach einem der Ansprüche 1 bis 6, **dadurch gekennzeichnet, dass** den Umlenkrollen (9, 10, 17, 18) kein eigener elektrischer, hydraulischer oder pneumatischer Antrieb zugeordnet ist.

8. Förderanlage nach einem der Ansprüche 1 bis 7, **dadurch gekennzeichnet, dass** das Stützrad (21) mit einem aus Gummi oder Elastomer hergestellten Reifen versehen ist.

9. Förderanlage nach einem der Ansprüche 1 bis 8, **dadurch gekennzeichnet, dass** die Drehachsen (17.1, 18.1) der Umlenkrollen (17,18) des mindestens einen zusätzlichen Prallbandes (15, 16) derart zu den Drehachsen (9.1, 10.1) der Umlenkrollen (9, 10) des ersten Prallbandes (8) ausgerichtet sind, dass die von den Prallbändern (8,15,16) definierten Prallflächen (8.1, 15.1, 16.1) quer zur Laufrichtung der Prallbänder (8, 15, 16) betrachtet um mindestens 10°, vorzugsweise um mindestens 12,5° zueinander abgewinkelt sind.

10. Förderanlage nach einem der Ansprüche 1 bis 9, **dadurch gekennzeichnet, dass** das mindestens eine zusätzliche Prallband (15, 16) mindestens zweifach vorgesehen ist, wobei das erste Prallband (8) zwischen den zusätzlichen Prallbändern (15, 16) angeordnet ist.

11. Förderanlage nach Anspruch 10, **dadurch gekennzeichnet, dass** die Drehachsen (17.1, 18.1) der Umlenkrollen (17,18) der zusätzlichen Prallbänder (15, 16) derart zu den Drehachsen (9.1, 10.1) der Umlenkrollen (9, 10) des ersten Prallbandes (8) ausgerichtet sind, dass die von den zusätzlichen Prallbändern (15, 16) definierten Prallflächen (8.1, 15.1, 16.1) quer zur Laufrichtung der Prallbänder betrachtet in unterschiedlichen Winkeln relativ zu der von dem ersten Prallband definierten Prallfläche angeordnet sind.

12. Förderanlage nach einem der Ansprüche 1 bis 11, **dadurch gekennzeichnet, dass** das erste Prallband (8) und das mindestens eine zusätzliche Prallband (15, 16) an ihren einander zugewandten Längskanten oder Längsränder zahnförmige Formschlusselemente aufweisen, wobei die Längskanten oder Längsränder nach Art einer Verzahnung ineinander greifen.

13. Förderanlage nach einem der Ansprüche 1 bis 12, **dadurch gekennzeichnet, dass** zumindest das erste Prallband (8) der Vorrichtung (2) zum Umlenken des Materialstroms durch ein endloses, umlaufendes Zug- und/oder Tragmittel der weiteren Fördereinrichtung (20) angetrieben wird.

14. Förderanlage nach einem der Ansprüche 1 bis 13, **dadurch gekennzeichnet, dass** das erste Prallband (8) der Vorrichtung (2) zum Umlenken des Materialstroms mit einem endlosen, umlaufenden Zug- und/oder Tragmittel der weiteren Fördereinrichtung derart gekoppelt ist, dass das erste Prallband (8) eigene Bewegungsenergie auf das Zug- und/oder Tragmittel der weiteren Fördereinrichtung (20) übertragen kann.

## Claims

1. Conveying system for transporting bulk material, having a conveying device (1) and a device (2), arranged at a discharge end of the conveying device (1), for deflecting a material stream flowing off from the discharge end of the conveying device (1), and having a further conveying device (20), which is arranged downstream of the conveying device (1) in the conveying direction of the material stream, the device (2) for deflecting the material stream being arranged between the conveying device (1) and the further conveying device (20), the device (2) for deflecting the material stream having a first endless, circumferentially movable impact belt (8), which is arranged in such a way that it can be exposed to the material flow, wherein the first impact belt (8) is made of at least one traction means provided with rubber or elastomer, and deflection rollers (9, 10) which deflect the first impact belt (8) and are rotatable about axes of rotation (9.1, 10:1) running parallel to one another, wherein in addition to the first impact belt (8), at least one additional endless, circumferentially movable impact belt (15,16) is provided, which is arranged substantially parallel to the first impact belt (8) and in such a way that it can be exposed to the material flow, wherein the additional impact belt (15, 16) is also made of at least one traction means provided with rubber or elastomer, wherein the additional impact belt (15,16) are assigned its own deflection rollers (17,18) which deflect the additional impact belt (15, 16) and are rotatable about axes of rotation (17.1, 18.1) running parallel to one another, wherein the axes of rotation (17.1, 18.1) of the deflection rollers (17,18) of the additional impact belt (15, 16) are inclined relative to the axes of rotation (9.1, 10. 1) of the deflection rollers (9, 10) of the first impact belt (8), so that the first impact belt (8) and the at least one additional impact belt (15, 16), viewed transversely to the running direction of the impact belts, define impact surfaces (8.1,15.1, 16.1) which are angled with respect to one another, the impact surfaces (8.1, 15.1,16.1) of the directly mutually adjacent impact belts (8, 15 or 8,16) define a trough angle (α1, α2), **characterized in that** the device (2) for deflecting the material flow has at least one support wheel (21) which is assigned to one of the impact belts (8,15,16) and transmits a circulating movement of the further conveyor device (20) following this impact belt (8, 15, 16) in the conveying direction to this impact belt (8, 15, 16), the further conveyor device (20) being designed as a continuous conveyor (20), preferably a conveyor belt.

2. Conveyor system according to claim 1, **characterized in that** at least one of the impact belts (8,15,16) comprises on its outer side a plurality of elongated projections which are spaced apart from one another, and which extend transversely to the running direction of the impact belt (8, 15, 16).

3. Conveyor system according to claim 2, **characterized in that** the respective elongated projection, viewed in the running direction of the impact belt (8, 15, 16), has an average width in the range from 6 cm to 14 cm, preferably 8 cm to 12 cm.

4. Conveyor system according to claim 2 or 3, **characterized in that** two adjacent elongated projections of the projections protrude outwardly by at least 20 mm, preferably by at least 30 mm with respect to a base surface of a groove bounded by them.

5. Conveyor system according to any one of claims 1 to 4, **characterized in that** the deflection rollers (9, 10, 17, 18) of at least one of the impact belts (8, 15, 16) are designed as toothed wheels, the impact belt (8, 15, 16) having toothing on its inner side which is in engagement with the toothed wheels.

6. Conveyor system according to any one of claims 1 to 5, **characterized in that** at least one of the deflection rollers (9, 10) of the first impact belt (8) and at least one of the deflection rollers (17, 18) of the additional impact belt (15, 16) are coupled to one another in a non-positive manner, preferably cardanically or by means of a hinge shaft.

7. Conveyor system according to any one of claims 1 to 5, **characterized in that** the deflection rollers (9, 10, 17, 18) are not assigned their own electric, hydraulic or pneumatic drive.

8. Conveyor system according to any one of claims 1 to 7, **characterized in that** the support wheel (21) is provided with a tire made of rubber or elastomer.

9. Conveyor system according to any one of claims 1 to 8, **characterized in that** the axes of rotation (17.1, 18.1) of the deflection rollers (17,18) of the at least one additional impact belt (15, 16) are aligned with the axes of rotation (9.1, 10. 1) of the deflection rollers (9, 10) of the first impact belt (8) in such a way that the impact surfaces (8.1, 15.1, 16.1) defined by the impact belts (8,15,16), viewed transversely to the running direction of the impact belts (8,15,16), are angled at least 10°, preferably at least 12.5°, to one another.

10. Conveyor system according to any one of claims 1 to 9, **characterized in that** the at least one additional impact belt (15, 16) is provided at least twice, the first impact belt (8) being arranged between the additional impact belts (15, 16).

11. Conveyor system according to claim 10, **characterized in that** the axes of rotation (17.1, 18.1) of the deflection rollers (17,18) of the additional impact belts (15, 16) are aligned with the axes of rotation (9.1, 10. 1) of the deflection rollers (9, 10) of the first impact belt (8) in such a way that the impact surfaces (8.1, 15.1, 16.1) defined by the additional impact belts (15, 16), viewed transversely to the running direction of the impact belts, are arranged at different angles relative to the impact surface defined by the first impact belt.

12. Conveyor system according to any one of claims 1 to 11, **characterized in that** the first impact belt (8) and the at least one additional impact belt (15, 16) have tooth-shaped positive-locking elements on their mutually facing longitudinal edges or longitudinal margins, the longitudinal edges or longitudinal margins engaging in one another in the manner of toothing.

13. Conveyor system according to any one of claims 1 to 12, **characterized in that** at least the first impact belt (8) of the device (2) for deflecting the material flow is driven by an endless, circulating traction and/or support means of the further conveyor device (20).

14. Conveyor system according to any one of claims 1 to 13, **characterized in that** the first impact belt (8) of the device (2) for deflecting the material flow is coupled to an endless, circulating traction and/or support means of the further conveyor device in such a way that the first impact belt (8) can transmit its own kinetic energy to the traction and/or support means of the further conveyor device (20).

## Revendications

1. Installation de convoyage pour le transport de matière en vrac, avec un dispositif de convoyage (1) et un dispositif (2) disposé au niveau d'une extrémité d'éjection du dispositif de convoyage (1) pour la déviation d'un flux de matière s'écoulant de l'extrémité d'éjection du dispositif de convoyage (1), et avec un autre dispositif de convoyage (20), lequel est disposé en aval du dispositif de convoyage (1) dans la direction de convoyage du flux de matière, dans laquelle le dispositif (2) pour la déviation du flux de matière est disposé entre le dispositif de convoyage (1) et l'autre dispositif de convoyage (20), dans laquelle le dispositif (2) pour la déviation du flux de matière comprend une première bande à impact (8) sans fin, à mobilité en circulation, laquelle est disposée de telle sorte qu'elle puisse être sollicitée par le flux de matière, dans laquelle la première bande à impact (8) est fabriquée à partir d'au moins un moyen de traction pourvu de caoutchouc ou d'élastomère, et comprend des rouleaux de déviation (9, 10), lesquels dévient la première bande à impact (8) et peuvent tourner autour d'axes de rotation (9.1, 10.1) s'étendant parallèlement les uns aux autres, dans laquelle est prévue, en plus de la première bande à impact (8), au moins une bande à impact supplémentaire (15, 16) sans fin, à mobilité en circulation, laquelle est disposée de manière sensiblement parallèle à la première bande à impact (8) et de telle sorte qu'elle puisse être sollicitée par le flux de matière, dans laquelle la bande à impact supplémentaire (15, 16) est également fabriquée à partir d'au moins un moyen de traction pourvu de caoutchouc ou d'élastomère, dans laquelle des rouleaux de déviation propres (17, 18) sont associés à la bande à impact supplémentaire (15, 16), lesquels dévient la bande à impact supplémentaire (15, 16) et peuvent tourner autour d'axes de rotation (17.1, 18.1) s'étendant parallèlement les uns aux autres, dans laquelle les axes de rotation (17.1, 18.1) des rouleaux de déviation (17, 18) de la bande à impact supplémentaire (15, 16) sont orientés ou orientables de manière inclinée par rapport aux axes de rotation (9.1, 10.1) des rouleaux de déviation (9, 10) de la première bande à impact (8), de telle sorte que la première bande à impact (8) et l'au moins une bande à impact supplémentaire (15, 16) définissent des surfaces d'impact (8.1, 15.1, 16.1) qui, vues transversalement à la direction de défilement des bandes à impact, forment un angle les unes par rapport aux autres, dans laquelle les surfaces d'impact (8.1, 15.1, 16.1) des bandes à impact immédiatement adjacentes les unes aux autres (8, 15; 8, 16) définissent un angle d'auge (α1, α2), **caractérisée en ce que** le dispositif (2) pour la déviation du flux de matière comprend au moins une roue d'appui (21), laquelle est associée à l'une des bandes à impact (8, 15, 16) et transmet un mouvement de rotation de l'autre dispositif de convoyage (20) en aval de cette bande à impact (8, 15, 16) dans la direction de convoyage à cette bande à impact (8, 15, 16), dans laquelle l'autre dispositif de convoyage (20) est conçu sous la forme d'un convoyeur en continu (20), de préférence d'une bande de convoyage.

2. Installation de convoyage selon la revendication 1, **caractérisée en ce qu'**au moins l'une des bandes à impact (8, 15, 16) comprend sur sa face externe une pluralité de saillies allongées, espacées les unes des autres, lesquelles s'étendent transversalement à la direction de défilement de la bande à impact (8, 15, 16).

3. Installation de convoyage selon la revendication 2, **caractérisée en ce que** la saillie allongée respective, vue dans la direction de défilement de la bande à impact (8, 15, 16), présente une largeur moyenne comprise dans la gamme allant de 6 cm à 14 cm, de préférence de 8 cm à 12 cm.

4. Installation de convoyage selon la revendication 2 ou la revendication 3, **caractérisée en ce que** deux saillies allongées adjacentes des saillies font saillie d'au moins 20 mm, de préférence d'au moins 30 mm, vers l'extérieur par rapport à une surface de base d'une rainure délimitée de celles-ci.

5. Installation de convoyage selon l'une des revendications 1 à 4, **caractérisée en ce que** les rouleaux de déviation (9, 10, 17, 18) d'au moins l'une des bandes à impact (8, 15, 16) sont conçus sous la forme de roues dentées, dans laquelle la bande à impact (8, 15, 16) comprend sur sa face interne une denture venant en prise avec les roues dentées.

6. Installation de convoyage selon l'une des revendications 1 à 5, **caractérisée en ce qu'**au moins l'un des rouleaux de déviation (9, 10) de la première bande à impact (8) et au moins l'un des rouleaux de déviation (17, 18) de la bande à impact supplémentaire (15, 16) sont accouplés l'un à l'autre à force, de préférence par cardan ou au moyen d'un arbre articulé.

7. Installation de convoyage selon l'une des revendications 1 à 6, **caractérisée en ce qu'**aucun entraînement électrique, hydraulique ou pneumatique propre n'est associé aux rouleaux de déviation (9, 10, 17, 18).

8. Installation de convoyage selon l'une des revendications 1 à 7, **caractérisée en ce que** la roue d'appui (21) est pourvue d'un pneu fabriqué à partir de caoutchouc ou d'élastomère.

9. Installation de convoyage selon l'une des revendications 1 à 8, **caractérisée en ce que** les axes de rotation (17.1, 18.1) des rouleaux de déviation (17, 18) de l'au moins une bande à impact supplémentaire (15, 16) sont orientés par rapport aux axes de rotation (9.1, 10.1) des rouleaux de déviation (9, 10) de la première bande à impact (8) de telle sorte que les surfaces d'impact (8.1, 15.1, 16.1) définies par les bandes à impact (8, 15, 16), vues transversalement à la direction de défilement des bandes à impact (8, 15, 16), forment un angle les unes par rapport aux autres d'au moins 10°, de préférence d'au moins 12,5°.

10. Installation de convoyage selon l'une des revendications 1 à 9, **caractérisée en ce que** l'au moins une bande à impact supplémentaire (15, 16) est prévue au moins en double, dans laquelle la première bande à impact (8) est disposée entre les bandes à impact supplémentaires (15, 16).

11. Installation de convoyage selon la revendication 10, **caractérisée en ce que** les axes de rotation (17.1, 18.1) des rouleaux de déviation (17, 18) des bandes à impact supplémentaires (15, 16) sont orientés par rapport aux axes de rotation (9.1, 10.1) des rouleaux de déviation (9, 10) de la première bande à impact (8) de telle sorte que les surfaces d'impact (8.1, 15.1, 16.1) définies par les bandes à impact supplémentaires (15, 16), vues transversalement à la direction de défilement des bandes à impact, soient disposées de sorte à former des angles différents par rapport à la surface d'impact définie par la première bande à impact.

12. Installation de convoyage selon l'une des revendications 1 à 11, **caractérisée en ce que** la première bande à impact (8) et l'au moins une bande à impact supplémentaire (15, 16) comprennent des éléments à complémentarité de forme, en forme de dents, au niveau de leurs arêtes longitudinales ou bords longitudinaux se faisant face, dans laquelle les arêtes longitudinales ou bords longitudinaux s'engrènent à la manière d'une denture.

13. Installation de convoyage selon l'une des revendications 1 à 12, **caractérisée en ce qu'**au moins la première bande à impact (8) du dispositif (2) pour la déviation du flux de matière est entraînée par l'intermédiaire d'un moyen de traction et/ou de support sans fin, en circulation, de l'autre dispositif de convoyage (20).

14. Installation de convoyage selon l'une des revendications 1 à 13, **caractérisée en ce que** la première bande à impact (8) du dispositif (2) pour la déviation du flux de matière est accouplée à un moyen de traction et/ou de support sans fin, en circulation, de l'autre dispositif de convoyage de telle sorte que la première bande à impact (8) puisse transmettre de l'énergie cinétique propre au moyen de traction et/ou de support de l'autre dispositif de convoyage (20).
